# EUROPEAN PATENT APPLICATION

(11) **EP 2 031 620 A2**
(43) Date of publication of application: **04.03.2009**
(21) Application number: 08162947.9
(22) Date of filing: 26.08.2008
(51) Int. Cl.: H01H 25/00, H01H 25/04, H01H 36/00, H01H 19/14

(54) **Input device, and electronic apparatus using same**

(30) Priority: 31.08.2007 JP 2007226208
(71) Applicant: Panasonic Corporation, Kadoma-shi Osaka 571-8501 (JP); Sony Ericsson Mobile Communications Japan, Inc., Minato-ku, Tokyo 108-0075 (JP)
(72) Inventor: Yamamoto, Tamotsu, Matsushita Elecgtric Industrial Co., Ltd., Chuo-ku Osaka 540-6207 (JP); Chida, Kunihisa, Sony Ericsson Mobile Communications, Minato-ku Tokyo 108-0075 (JP); Inoue, Hiroto, Matsushita Elecgtric Industrial Co., Ltd., Chuo-ku Osaka 540-6207 (JP); Izawa, Koichi, Sony Ericsson Mobile Communications, Minato-ku Tokyo 108-0075 (JP)
(74) Representative: TBK-Patent

(57) **Abstract**

Provided are an input device capable of a variety of operations with a simple configuration, and an electronic apparatus using the same. A rotary operation portion 2 includes ring magnets 4 securely attached at opposite ends of a roller 3, each ring magnet 4 being magnetized with the Sand N-poles alternating at a predetermined angular pitch, and magnetic sensing elements 13 and stationary magnets 7 disposed so as to face their respective ring magnets 4. The rotary operation portion 2 is covered by an operation plate 16 having formed at its center a roller insertion hole 16a for projecting a part of the outer circumferential surface of the roller 3. The rotation of the roller 3 is magnetically sensed, and switches 9 and 11 are provided so as to be turned "ON"/"OFF" in accordance with operations of pressing the roller 3 and rocking the operation plate 16 in the "front", "back", "left", and "right" directions.

## Description

### FIELD OF THE INVENTION

The present invention relates to an input device for use in operating various electronic apparatuses, and an electronic apparatus using the same.

### BACKGROUND OF THE INVENTION

In recent years, as various electronic apparatuses, such as cell phones and camcorders, have become more sophisticated and compact, input devices for use in operating such electronic apparatuses have been required to be capable of a wide variety of operations.

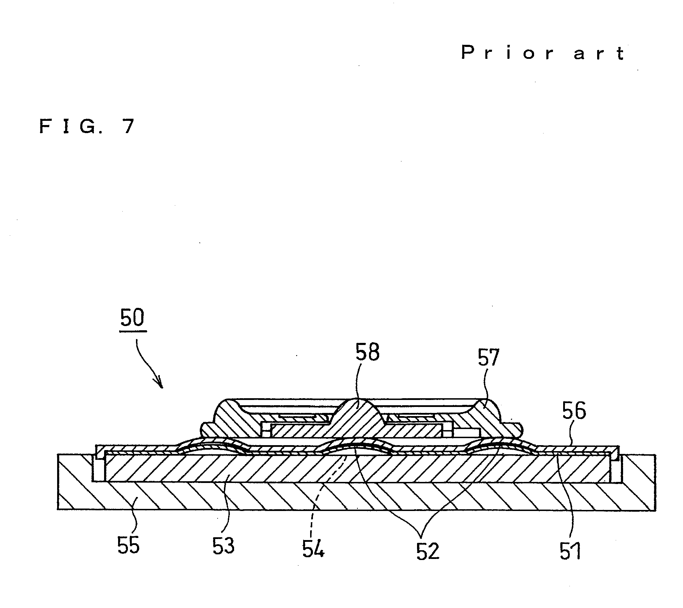

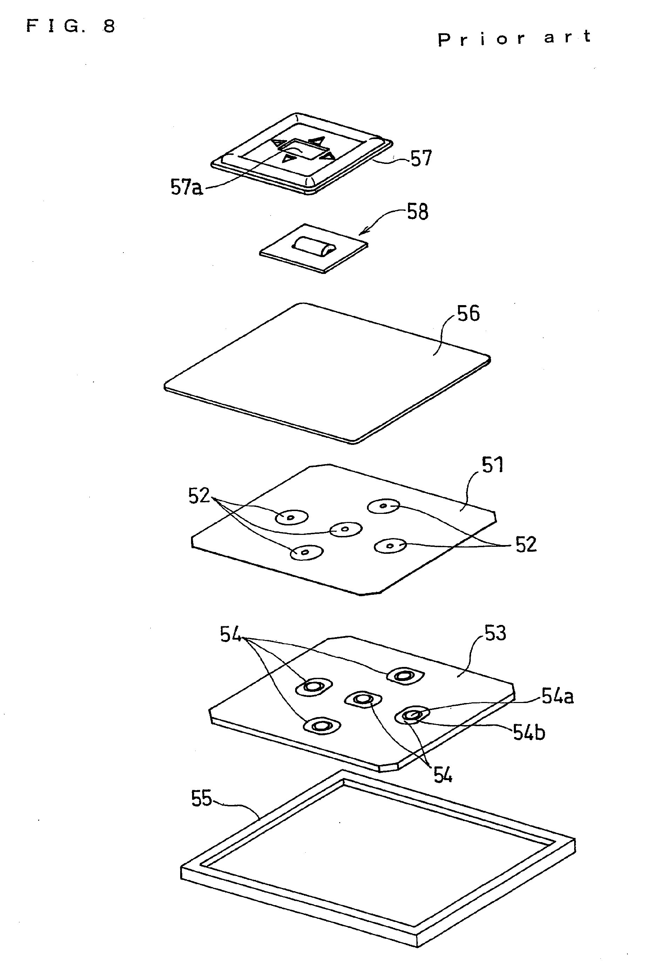

A conventional input device will be described below with reference to the drawings. FIG. 7 is a cross-sectional view illustrating a substantial portion of the conventional input device, and FIG. 8 is an exploded perspective view of the same device.

As shown in FIGS. 7 and 8, the input device 50 includes a case 55 made up of insulating resin. The case 55 has mounted thereon a wiring board 53 with a flexible film-like base sheet 51 attached on its top surface. Furthermore, the base sheet 51 has mounted on its top surface a cover sheet 56, such as rubber, on which are provided a push button 58 made up of insulating resin, and a substantially square operation unit 57 made up of insulating resin and having provided at its center a button insertion hole 57a into which the push button 58 is inserted.

The wiring board 53 has a plurality of wiring patterns (not shown) formed on both its top and bottom surfaces, and a plurality (in the illustrated example, five) of stationary contacts 54 provided on the top surface facing the base sheet 51, the stationary contacts being arranged such that four are disposed around and at the front, back, left, and right, respectively, of one contact disposed at the center. Each stationary contact 54 consists of a substantially circular inner terminal 54a, and a substantially ring- or U-shaped outer terminal 54b provided so as to be insulated from and surround the inner terminal 54a.

Correspondingly, the base sheet 51 has movable contacts 52 made up of substantially domical sheet metal and attached via an adhesive (not shown) at locations on its bottom surface facing their respective stationary contacts 54 on the wiring board 53. Each movable contact 52 is disposed so as to face the stationary contact 54, while being convex toward the cover sheet 56, during normal state in which no external force is applied thereto, and in this state, the movable contact 52 is in contact at its perimeter with the outer terminal 54b of the stationary contact 54, while having its center spaced apart at a predetermined distance from the inner terminal 54a.

The push button 58 is provided at a location corresponding to the movable contact 52 at the center. By pressing the push button 58, the movable contact 52 at the center is depressed and elastically reversed downward so as to be convex toward the wiring board 53. The elastically reversed movable contact 52 at the center is brought into contact with both the inner terminal 54a and the outer terminal 54b of the stationary contact 54, so that the inner terminal 54a and the outer terminal 54b of the stationary contact 54 are rendered conductive via the movable contact 52. That is, a switch consisting of the movable contact 52 at the center and the stationary contact 54 corresponding thereto is turned "ON". When the push button 58 returns to its original position, the movable contact 52 at the center recovers its original state, turning the switch "OFF".

The operation unit 57 is disposed such that the surrounding movable contacts 52 face their respective edges at midpoints on the perimeter sides of the operation unit 57. Furthermore, the operation unit 57 is provided on the cover sheet 56 so as to be capable of rocking in such a manner that, when a portion located around and at the front, back, left, or right of the button insertion hole 57a is pressed from above, a side of the perimeter that corresponds to the pressed portion moves down.

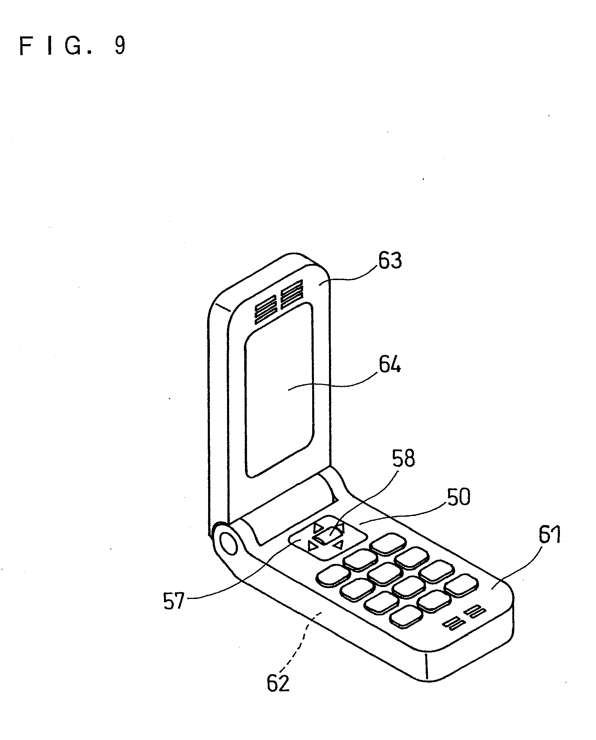

For example, the input device 50 thus configured is installed at the top surface of a stationary housing 61 of an electronic apparatus, such as a cell phone as shown in a perspective view in FIG. 9. Here, the stationary contacts 54 are connected to a control means 62, such as a microcomputer, within the electronic apparatus via unillustrated wiring patterns or suchlike.

In the above configuration, it is assumed that a plurality of menu items, such as names of people, and a cursor (not shown), are displayed on a display means 64, such as a liquid crystal display element, which is provided at the front of a movable housing 63 attached to the stationary housing 61 in an openable/closable manner. In this state, by pressing the operation unit 57 of the input device 50 at a portion in the "front" direction (the direction toward the movable housing 63), the operation unit 57 is caused to rock such that the edge in the front direction moves down (hereinafter, such an operation is referred to by "rocking the operation unit 57 in the "front" direction", for example), thereby depressing downward the movable contact 52 corresponding thereto via the cover sheet 56 and the base sheet 51.

When predetermined pushing force is applied, the movable contact 52 is elastically reversed downward while providing a clicking effect, and brought into contact with both the inner terminal 54a and the outer terminal 54b of the stationary contact 54, so that the inner terminal 54a and the outer terminal 54b are connected via the movable contact 52, which is sensed by the control means 62, so that the cursor moves upward within the display means 64 to select any of the names or suchlike displayed on the display means 64.

In addition, for example, when rocking the operation unit 57 in the back, left, or right direction, the movable contact 52 corresponding thereto is similarly depressed and elastically reversed, which is sensed by the control means 62, so that the cursor on the display means 64 moves downward, leftward, or rightward within the display means 64 to select a name or suchlike.

Furthermore, when the push button 58 is pressed with the cursor being placed on a desired name or suchlike, the movable contact 52 at the center corresponding thereto is depressed and elastically reversed, which is sensed by the control means 62, thereby setting the selected name or suchlike, for example, to perform communication with the selected person.

Specifically, by rocking the operation unit 57 in a predetermined direction or pressing the push button 58 at the center of the operation unit 57, the movable contact 52 corresponding thereto is elastically reversed to achieve electrical connection/disconnection of the stationary contact 54 corresponding thereto. At the same time, the control means 62 senses which stationary contact 54 has been electrically connected/disconnected, and controls the menu items, the cursor, etc., displayed on the display means 64 in accordance with the operation.

Note that an operation device in which a switching operation can be performed both by the rocking operation and by the pressing operation is proposed in Japanese Laid-Open Patent Publication No. 2003-123596.

However, in order to perform a wider variety of operations, conventional input devices as described above and electronic apparatuses using such a conventional input device require a larger number of operation units, push buttons, switching contacts, etc., and it is difficult to provide such elements within a limited space. In addition, when attempting to reduce the size of operation units and push buttons in order to save the space, another problem arises where operations become harder to perform.

The present invention has been made in view of the above problems, and objectives thereof are to provide an input device capable of various operations with a simple configuration, and an electronic apparatus using the same.

### BRIEF SUMMARY OF THE INVENTION

To achieve the above objectives, the present invention provides an input device, comprising:
a rotary operation portion including:
   a roller to be rotationally operated by external force applied to its outer circumferential surface in a circumferential direction;
   ring magnets fitted and secured on their respective rotary shafts provided on opposite end surfaces of the roller, the ring magnets each being magnetized with the Sand N-poles alternating at a predetermined angular pitch; and
   magnetic sensing elements and stationary magnets provided so as to face their respective ring magnets;
an operation plate having provided at its center an insertion hole into which the roller is inserted, so as to allow a part of the outer circumferential surface to project upward, the operation plate being disposed so as to cover the rotary operation portion other than the part of the outer circumferential surface from above and so as to be able to rock in such a manner that, when portions in directions around the insertion hole are pressed, the pressed portions move down; and
a plurality of switches provided at locations corresponding to the portions in the directions in the operation plate, each switch being turned "ON" when its corresponding portion moves down, and "OFF" when the corresponding portion returns to its original position.

According to the thus configured input device of the present invention, the switches around the roller are turned "ON"/"OFF" by rocking the operation unit. In addition, a magnetic field created by the ring magnets fitted on the rotary shafts is changed by rotationally operating the roller having a part of its outer circumferential surface projected from the roller insertion hole provided at the center of the operation unit, and such a change is sensed by the magnetic sensing elements to output corresponding signals. Thus, it becomes possible to execute a wide variety of operations with a simple configuration without increasing the number of components, including operation plates and push buttons. Here, the roller is supported so as not to rotate unless external force of more than a predetermined value is exerted by the magnetic force of the stationary magnets provided so as to face their respective ring magnets.

Also, in the input device of the present invention, it is preferable that the rotary operation portion be provided so as to be able to move up and down, and a switch be provided at a location corresponding to the rotary operation portion, the switch being turned "ON" when the rotary operation portion moves down, and "OFF" when the rotary operation portion returns to its original position.

With this configuration, by pressing the rotary operation portion, the corresponding switch can be turned "ON"/"OFF". Thus, it is possible to achieve a wider variety of operations.

Also, it is preferable that the ring magnets be secured on the rotary shafts such that the magnetizing magnetic poles are out of phase with each other. As a result, it becomes possible to readily sense the rotational angle of the roller with the magnetic sensing elements.

Also, to achieve the above objectives, the present invention provides an electronic apparatus, comprising:
the input device as set forth above;
a control unit connected to the magnetic sensing elements and the switches; and
a display unit connected to the control unit,
Wherein the control unit controls a display on the display unit based on signals from the magnetic sensing elements and the switches.

Thus, it is possible to achieve electronic apparatuses capable of a wide variety of operations with a simplified configuration.

As such, the present invention makes it possible to achieve input devices capable of a wide variety of operations with a simplified configuration and electronic apparatuses using such an input device.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a vertical cross-sectional view illustrating a substantial portion of an input device according to an embodiment of the present invention.

FIG. 2 is a cross-sectional view of the same device, taken along line X-X in FIG. 1.

FIG. 3 is an exploded perspective view of the same device.

FIG. 4 is an exploded perspective view of a rotary operation portion of the same device.

FIG. 5 is a perspective view of a cell phone using the same device.

FIG. 6A is a plan view of an exemplary display on a display means of the cell phone, presenting a list of people having their phone numbers registered.

FIG. 6B is a plan view of an exemplary display on the display means of the cell phone, presenting a map.

FIG. 7 is a vertical cross-sectional view illustrating a substantial portion of a conventional input device.

FIG. 8 is an exploded perspective view of the conventional input device.

FIG. 9 is a perspective view of a cell phone using the conventional input device.

### DETAILED DESCRIPTION OF THE INVENTION

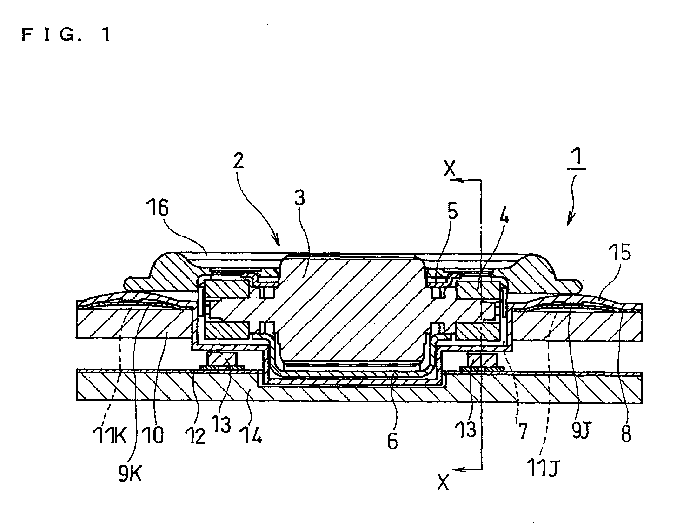

Hereinafter, an embodiment of the present invention will be described with reference to FIGS. 1 to 6.

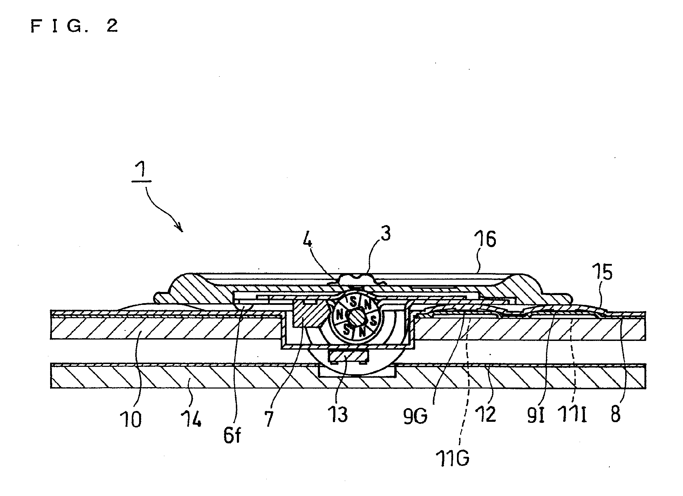

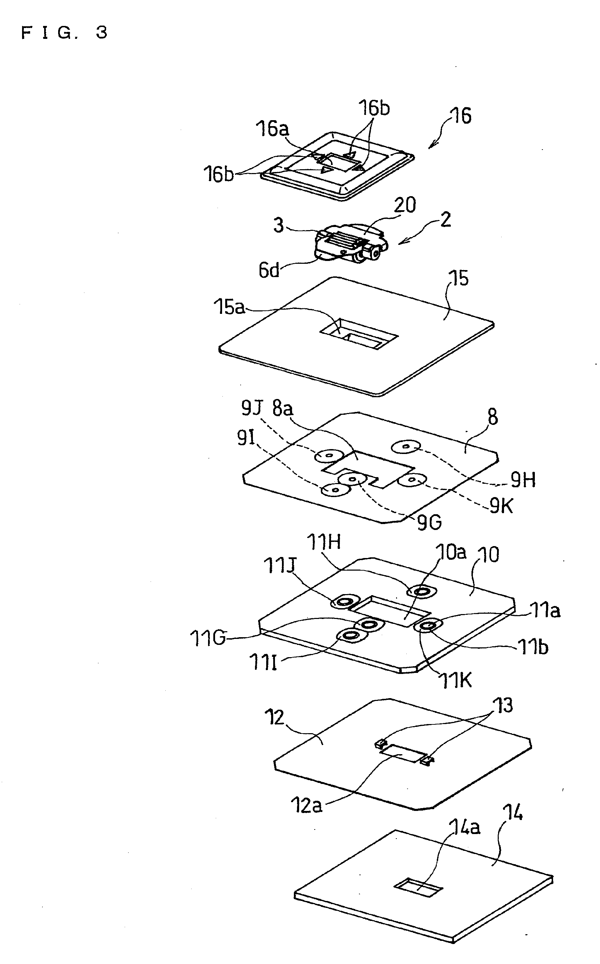

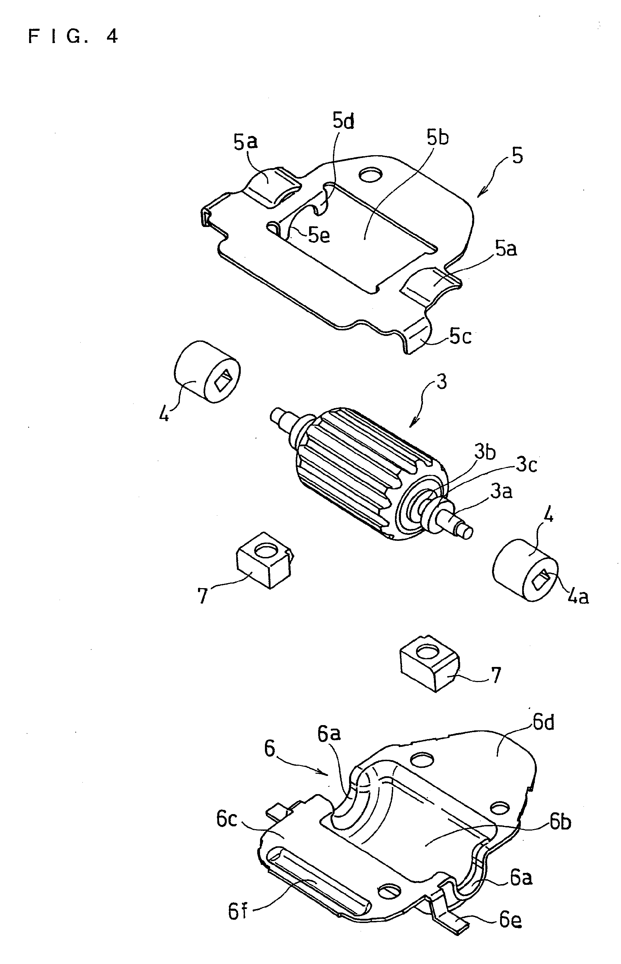

FIG. 1 is a cross-sectional view illustrating a substantial portion of an input device according to the embodiment of the present invention, FIG. 2 is a cross-sectional view taken along line X-X in FIG. 1, FIG. 3 is an exploded perspective view of the device, and FIG. 4 is an exploded perspective view of a rotary operation portion.

As shown in FIGS. 1 to 3, the input device 1 includes a case 14 made up of insulating resin. The case 14 has sequentially mounted thereon a lower wiring board 12 and an upper wiring board 10 having a base sheet 8 attached on its top surface. The base sheet 8 has mounted on its top surface a cover sheet 15 having a rotary operation portion 2 provided on its top surface, and the rotary operation portion 2 is covered by an operation plate 16 with a part thereof exposed to the outside.

As shown in FIG. 4, the rotary operation portion 2 includes: a roller 3; a roller case 20 (see FIG. 3) for rotatably housing the roller 3 therein; ring magnets 4 fitted and secured on rotary shafts 3a projecting at opposite end surfaces of the roller 3; and stationary magnets 7 and magnetic sensing elements 13 (see FIGS. 1 and 2) disposed so as to face their respective ring magnets 4. The roller 3 is a substantially columnar member made up of metal, such as aluminum, or insulating resin, which is rotated when external force is circumferentially applied to its outer circumferential surface having grooves formed therein at a predetermined pitch, extending in a direction perpendicular to the circumferential direction so as to be readily rotated with a finger.

The ring magnet 4 has provided at its center a shaft insertion hole 4a into which the rotary shaft 3a of the roller 3 is inserted, and as shown in FIG. 2, the ring magnet 4 is magnetized with the S- and N-poles alternating several times (in the illustrated example, three times each) at a predetermined angular pitch (in the illustrated example, at intervals of 60 degrees). Here, the ring magnets 4 at the left and right ends of the roller 3 are secured on the rotary shafts 3a so as to be approximately five to six degrees out of alignment with each other in the circumferential direction. Specifically, the ring magnets 4 are provided on the rotary shafts of the roller 3, such that the angular position of the roller 3 at which the magnetic force of each magnetic pole is maximized varies by approximately five to six degrees between the left and right ring magnets 4. In other words, the ring magnets 4 are secured on the rotary shafts 3a such that their magnetizing magnetic poles are out of phase with each other.

The stationary magnets 7 are disposed so as to face their respective ring magnets 4 at a predetermined distance with the same magnetic poles pointing to the ring magnets 4. Since the ring magnets 4 and the stationary magnets 7 are disposed in this manner, the stationary magnets 7 respectively facing the right and left ring magnets 4 can be adjusted in height level, shape, etc, to attain balance between the right and the left sides, thereby equilibrating the state of attraction between one combination of the stationary magnet 7 with the ring magnet 4 and the other combination. Thus, it is possible to stably stop the roller 3. By rotating the roller 3 of the rotary operation portion 2 thus configured, forces of attraction and repulsion are created between the ring magnets 4 and the stationary magnets 7 in accordance with the rotation, thereby making it possible to provide a satisfactory smooth feeling of operation as well as a clicking effect.

The roller case 20 consists of an upper cover 5 in the form of a copper alloy or steel plate, and a lower cover 6 made up of the same material, which is a container for housing the roller 3. The upper cover 5 has bearing portions 5a formed at opposite ends, whereas the lower cover 6 has bearing portions 6a formed at opposite ends, and the bearing portions 5a and 6a are combined to form bearings for the rotary shafts 3a. In addition, the upper cover 5 has provided at its center a through hole 5b into which the roller 3 is inserted so as to project a part of its outer circumferential surface to the outside. In addition, the upper cover 5 has a plate-like magnet holding portion 5c provided upright at each end situated adjacent to the bearing portion 5a, extending toward the lower cover 6 and cooperating with a magnet support 6e of the lower cover 6 to be described later in order to hold the stationary magnet 7 therebetween.

Here, each rotary shaft 3a of the roller 3 is provided with a larger diameter portion 3c, and a groove 3b is formed between the larger diameter portion 3c and the end surface of the roller 3. Correspondingly, the upper cover 5 has a plate-like covering portion 5d provided upright at a location closer to the center (at the edge of the through hole 5b) in the vicinity of each bearing portion 5a, the plate-like covering portion 5d extending toward the lower cover 6 so as to be loosely fitted in the groove 3b in the rotary shaft 3a of the roller 3. The covering portion 5d has a semicircular notch 5e provided at a portion to be fitted on the rotary shaft 3a of the roller 3. The roller 3 is axially supported with the larger diameter portion 3c of each rotary shaft 3a being in sliding contact with the bearing portions 5a and 6a of the upper and lower covers 5 and 6.

The lower cover 6 includes a roller housing portion 6b having the bearing portion 6a provided at each end, a fulcrum-side flange 6c formed on one side of the roller housing portion 6b, and a working point-side flange 6d formed on the other side. The fulcrum-side flange 6c has an elongated plate-like magnet support 6e provided at each end situated adjacent to the bearing portion 6a, the magnet support 6e being bent substantially at a right angle so as to cooperate with the magnet holding portion 5c of the upper cover 5 in order to hold the stationary magnet 7 therebetween. The fulcrum-side flange 6c has a protrusion 6f at an end away from the roller housing portion 6b, extending in parallel to the axial direction of the roller 3 and bulging out toward the cover sheet 15. The protrusion 6f is in contact with the cover sheet 15, as shown in FIG. 2, and therefore, when the roller 3 is pressed from above, the rotary operation portion 2 rocks up and down with respect to the case 14 while pivoting about the protrusion 6f.

In addition, the magnetic sensing elements 13, such as hall elements, are provided on the top surface of the lower wiring board 12 so as to be opposed to their respective ring magnets 4 with the cover sheet 15 interposed therebetween.

The operation plate 16 is a substantially square board made up of insulating resin and having provided at its center a roller insertion hole 16a into which the roller 3 is inserted so as to project a part of its outer circumferential surface to the outside. The operation plate 16 is disposed with two sides of its perimeter in parallel to the axial direction of the roller 3, and the other two sides perpendicular to the axial direction of the roller 3. In addition, the operation plate 16 is provided on the top surface of the cover sheet 15 so as to be capable of rocking while pivoting on independently provided pins or undulating surface (not shown) in such a manner that, when a portion located around and at the front or back (two directions perpendicular to the axial direction of the roller 3) or the left or right (two directions in parallel with the axial direction of the roller 3) of the roller insertion hole 16a is pressed from above, a section corresponding to that portion moves down without interfering with the rotary operation portion 2.

The cover sheet 15 is a substantially rectangular plate-like member made up of an elastic insulating material, such as silicon resin, urethane rubber, or elastomer, and having provided at its center a recessed portion 15a in which the rotary operation portion 2 is fitted.

The upper wiring board 10 is made up of paper phenol resin, glass-containing epoxy resin, or the like, and has formed on its top and bottom surfaces a plurality of wiring patterns (not shown) by copper foil or suchlike. In addition, the upper wiring board 10 has provided at its center a through hole 10a into which a bulge corresponding to the recessed portion 15a of the cover sheet 15 is fitted. Also, the upper wiring board 10 has a plurality (in the illustrated example, five) of stationary contacts 11G, 11H, 11I, 11J, and 11K formed on the top surface facing the base sheet 8. One (11G) of the stationary contacts 11G to 11K is situated at a location corresponding to the working point-side flange 6d of the lower cover 6 in the vicinity of the through hole 10a. The other stationary contacts 11H, 11I, 11J, and 11K are provided at locations respectively corresponding to edges at midpoints on the four sides of the operation plate. The stationary contacts 11G to 11K each consist of a substantially circular inner terminal 11a, and a substantially ring- or U-shaped outer terminal 11b provided so as to be insulated from and surround the circular inner terminal 11a.

The lower wiring board 12 is a film-like member made up of an insulating material, such as polyethylene terephthalate or polycarbonate, and the lower wiring board 12 has provided at its center a through hole 12a into which a bulge corresponding to the recessed portion 15a of the cover sheet 15 is fitted, while having formed on its top surface a plurality of wiring patterns (not shown) by conductive materials, such as copper foil, silver, and carbon.

The base sheet 8 is a flexible film-like member, such as polyethylene terephthalate, polycarbonate, or polyimide, and has provided at its center a through hole 8a into which a bulge corresponding to the recessed portion 15a of the cover sheet 15 is fitted. In addition, the base sheet 8 has substantially domical movable contacts 9G, 9H, 9I, 9J, and 9K provided on its bottom surface at locations facing their respective stationary contacts 11 of the upper wiring board 10, the movable contacts being made up of conductive sheet metal, such as copper alloy or steel, and attached via an adhesive (not shown), such as acrylic resin or silicon resin. The movable contacts 9G to 9K are disposed so as to face their respective stationary contacts 11G to 11K, while being convex toward the cover sheet 15, during normal state in which no external force is applied thereto, and in this state, the movable contacts 9G to 9K are in contact at their perimeters with their respective outer terminals 11b of the stationary contacts 11G to 11K, while having their centers spaced apart at a predetermined distance from their respective inner terminals 11a of the stationary contacts 11G to 11K.

The case 14 is a plate-like member made up of insulating resin, and has at its center a recessed portion 14a in which a bulge corresponding to the recessed portion 15a of the cover sheet 15 is fitted.

In the input device 1 thus configured, when the roller 3 is pressed, the rotary operation portion 2 rocks while pivoting on the protrusion 6f, so that the working point-side flange 6d depresses the movable contact 9G provided at a corresponding location. As a result, the movable contact 9G is elastically reversed downward so as to be convex toward the upper wiring board 10, so that it is brought into contact with both the inner terminal 11a and the outer terminal 11b of the stationary contact 11G. Thus, the inner terminal 11a and the outer terminal 11b of the stationary contact 11G are rendered conductive via the movable contact 9G. That is, a switch consisting of the movable contact 9G and the stationary contact 11G corresponding thereto is turned "ON". When the pressed roller 3 is released, so that the rotary operation portion 2 returns to its original position, the movable contact 9G is elastically reversed upward, thereby turning the switch "OFF".

In addition, when the operation unit 16 is pressed in a portion in one of the directions around the roller insertion hole 16a, the pressed portion moves down, so that one of the movable contacts 9H to 9K that is situated in that direction is elastically reversed downward, and the inner terminal 11a and the outer terminal 11b of one of the stationary contacts 11H to 11K that faces the movable contact is rendered conductive via the movable contact. That is, a switch consisting of the movable contact and the stationary contact corresponding thereto is turned "ON". When the pressed portion is released, and returns to its original position, the movable contact is elastically reversed upward, thereby turning the switch "OFF".

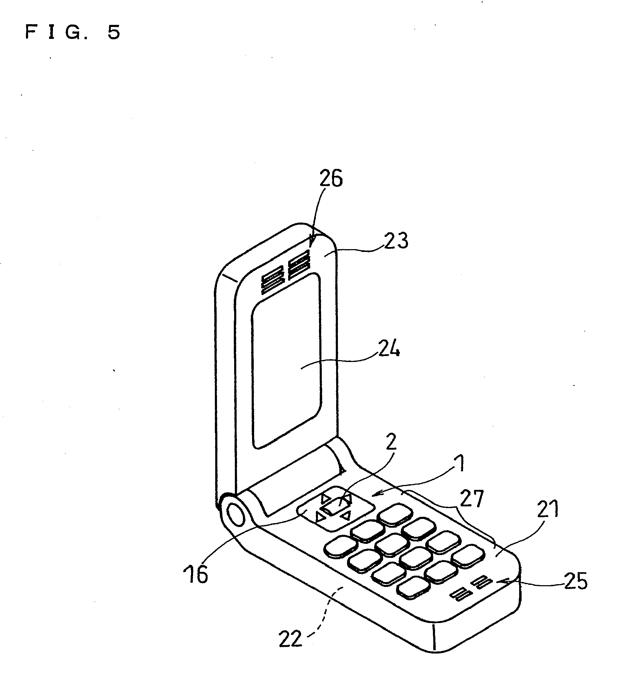

For example, the input device 1 thus configured is installed at the top surface of a stationary housing 21 of an electronic apparatus, such as a cell phone as shown in the perspective view in FIG. 5. Here, the stationary contacts 11 and the magnetic sensing elements 13 are connected to a control means 22, such as a microcomputer, within the apparatus via unillustrated wiring patterns or suchlike. In addition, the apparatus is configured with the control means 22 connected to a display means 24, such as a liquid crystal display element, at the front of a movable housing 23 attached to the stationary housing 21 in an openable/closable manner. Here, the stationary housing 21 is provided with a mouthpiece 25 and a group of buttons 27, while the movable housing 23 is provided with an earpiece 26.

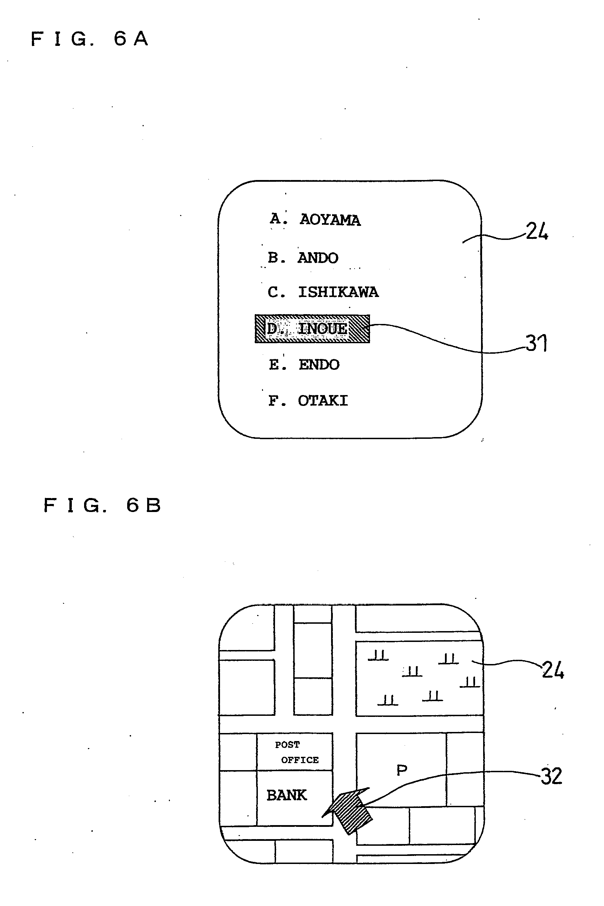

In the above configuration, a plurality of menu items, such as names of people, and a cursor 31, or a map and a pointer 32, are displayed on the display means 24, as shown in FIGS. 6A and 6B. In such a state, by pressing the operation plate 16 of the input device 1 at a portion in, for example, the "front" direction (the direction toward the movable housing 23), the operation plate 16 is caused to rock such that a section corresponding to that portion moves down (hereinafter, such an operation is referred to by "rocking in the "front" direction", for example), thereby depressing the movable contact 9H corresponding thereto via the cover sheet 15 and the base sheet 8.

When predetermined pushing force is applied, the movable contact 9H is elastically reversed downward while providing a clicking effect, and brought into contact at the bottom surface with both the inner terminal 11a and the outer terminal 11b of the stationary contact 11H corresponding to the movable contact 9H, so that the inner terminal 11a and the outer terminal 11b are connected via the movable contact 9H, which is detected by the control means 22 of the electronic apparatus to move up the cursor 31 displayed over a name (FIG. 6A) or the pointer 32 displayed over a map (FIG. 6B) on the display means 24.

In addition, for example, when rocking the operation plate 16 in the "back", "left", or "right" direction, a corresponding one of the movable contacts 9I to 9K is elastically reversed, which is detected by the control means 22, thereby causing the cursor 31 or the pointer 32 on the display means 24 to move downward, leftward, or rightward to select a name of a person or a menu item on a map or suchlike.

Furthermore, by operating the roller 3 projecting from the center of the operation plate 16 so as to rotate forward or backward, the ring magnets 4 situated at opposite ends of the roller 3 and magnetized with the alternate S- and N-poles are rotated, thereby changing the magnetism of the ring magnets 4 on the right and left sides, which is detected by the magnetic sensing elements 13. At this time, since the ring magnets 4 situated at the opposite ends of the roller 3 are securely attached with their magnetizing magnetic poles being out of phase with each other by a predetermined angle in the circumferential direction, as described above, pulsed signals differing in phase are outputted from the magnetic sensing elements 13 to the control means 22.

Then, the control means 22 detects the rotational direction and angle of the roller 3 based on the pulsed signals differing in phase, and causes the cursor 31 or the pointer 32 to move upward or downward on the display means 24. At this time, the cursor 31 or the pointer 32 is caused to move upward or downward within the display means 24 at a speed different from that in the case of rocking the operation plate 16 in the "front" or "back" direction as described above, e.g., at a higher speed, thereby selecting a name of a person or a point on the map, for example.

Furthermore, by pressing the roller 3 with the cursor 31 or the pointer 32 placed on a desired name or point, the rotary operation portion 2 attached to the case 14 so as to be capable of rocking is caused to rock downward, and the corresponding movable contact 9G is depressed by the bottom surface of the working point-side flange 6d of the lower cover 6, so that the terminals 11a and 11b of the stationary contact 11G corresponding thereto are connected, which is detected by the control means 22, thereby setting the selected menu item, for example, to perform communication with the selected person or magnify the selected point on the map.

As described above, the input device 1 according to the present embodiment is configured such that, by operating the operation plate 16 so as to rock in the "front", "back", "left", or "right" direction, a corresponding one of the movable contacts 9H to 9K is elastically reversed downward, thereby achieving electrical connection/disconnection of a corresponding one of the stationary contacts 11H to 11K, and by rotating the roller 3 of the rotary operation portion 2 at the center of the operation plate 16, the magnetic sensing elements 13 can detect the rotational direction and angle of the roller 3 based on changes in magnetism of the ring magnets 4, and output the detected rotational direction and angle as pulsed signals differing in phase.

Specifically, by forming a plurality of switches at the front, back, left, and right of the magnetic rotary operation portion 2, while projecting the roller 3 from the center of the operation plate 16 for turning the switches "ON"/"OFF", it becomes possible to perform various operations, including rocking operations in the "front", "back", "left", and "right" directions with respect to the operation plate 16, by rotationally operating the rotary operation portion 2 at the center of the operation plate 16. Thus, it is possible to achieve a wide variety of operations with a simple configuration without providing any additional components, such as additional operation units and push buttons.

In addition, an electronic apparatus capable of a wide variety of operations can be achieved by the control means 22 detecting "ON"/"OFF" of the switches by the rocking operations of the operation plate 16 as well as the pulsed signals provided by the rotational operations of the roller 3, while controlling the display on the display means 24, e.g., changing the moving speed of the cursor 31 or the pointer 32 displayed on the display means 24, in accordance with the operations on the input device 1.

Furthermore, it also becomes possible to perform a wider variety of operations, including setting of selected menu items, by attaching the rotary operation portion 2 to the case 14 so as to be capable of rocking or moving up and down, and providing the switch consisting of the movable contact 9G and the stationary contact 11G therebelow, such that "ON"/"OFF" of the switch by pressing the roller 3 can be detected by the control means 22.

In addition, by securely attaching the ring magnets 4, each being magnetized with the N- and S-poles alternating at a predetermined angular pitch, to the rotary shafts 3a at opposite ends of the roller 3 of the rotary operation portion 2, while disposing the stationary magnets 7 so as to face their respective ring magnets 4, the state of attraction between one combination of the stationary magnet 7 with the ring magnet 4 and the other combination is equilibrated when the roller 3 is at rest, thereby stably holding the roller 3. Also, when the roller 3 is rotated, forces of attraction and repulsion are created between the ring magnets 4 and the stationary magnets 7 in accordance with the rotation, thereby making it possible to provide a satisfactory feeling of operation as well as a clicking effect.

In addition, by covering the roller 3 with the upper cover 5 and the lower cover 6, while providing the upper cover 5 with the covering portions 5d at the edges of the through hole 5b from which a part of the outer circumferential surface of the roller 3 projects, such that the covering portions 5d are loosely fitted in the grooves 3b in the rotary shafts 3a of the roller 3, it becomes possible to prevent dust and liquid, such as water, from entering the roller case 20.

In addition, the ring magnets 4 are securely attached to the rotary shafts 3a on the right and left sides of the roller 3 with their magnetizing magnetic poles being out of phase with each other at a predetermined angle in the circumferential direction, and therefore by setting the height level, shape, etc., of the left and right stationary magnets 7 disposed so as to face their respective ring magnets 4, in such a manner as to attain balance between the right and left sides, the state of attraction between one combination of the stationary magnet 7 with the ring magnet 4 and the other combination can be equilibrated, making it possible to stably stop the roller 3.

As described above, in the input device 1 according to the present embodiment, signals are outputted in accordance with the rotational and pressing operations on the roller 3 in the rotary operation portion 2, as well as the rocking operations in the "front", "back", "left", and "right" directions of the operation plate 16 covering the rotary operation portion 2 with the roller 3 exposed to the outside at the center, and therefore it is possible to execute a wide variety of operations with a simple configuration. Also, by mounting the input device 1 in various electronic apparatuses, such as cell phones, it is possible to achieve electronic apparatuses capable of executing a wide variety of operations with a simple configuration.

While the foregoing description has been given with respect to an embodiment of the present invention, the present invention is not limited thereto, and various modifications are possible. For example, in the above embodiment, the switches consist of combinations of the substantially domical movable contacts 9G to 9K made up of conductive sheet metal with their respective stationary contacts 11G to 11K, but the present invention can be carried out using various switches, including substantially domical switches, each being made up of flexible sheet rubber and having a carbon contact formed on its bottom surface as a movable contact, or by using a single push-switch.

In addition, while the ring magnets 4 have been described as being securely attached to the rotary shafts 3a of the roller 3 with the magnetizing magnetic poles being out of phase with each other at a predetermined angle in the circumferential direction, thereby obtaining pulsed signals differing in phase from the magnetic sensing elements 13, the pulsed signals differing in phase may be obtained by displacing the attaching positions of the magnetic sensing elements 13 by a predetermined angle with respect to the circumferential direction of the roller 3. In such a case, for example, if the ring magnets 4 are magnetized with the Sand N-poles alternating at intervals of 60 degrees, a signal of one pulse is outputted per rotation of 120 degrees. Therefore, for example, by disposing the left and right magnetic sensing elements 13 facing their respective ring magnets 4, so as to be displaced from each other by 30 degrees, it becomes possible to obtain pulsed signals differing from each other by 1/4 of the phase.

In addition, while the operation plate 16 in the above embodiment can be operated so as to rock in the four directions, i.e., the "front", "back", "left", and "right" directions, the number of corresponding switches (movable contacts and stationary contacts) to be disposed may be increased such that the rocking operation is possible in a total of eight directions by adding four further directions, such as diagonally right and left directions both at the front and the back.

The input device according to the present invention and the electronic apparatus using the same are characterized by allowing various operations to be performed with a simple configuration, and are mainly useful in operating various electronic apparatuses.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

Provided are an input device capable of a variety of operations with a simple configuration, and an electronic apparatus using the same. A rotary operation portion 2 includes ring magnets 4 securely attached at opposite ends of a roller 3, each ring magnet 4 being magnetized with the Sand N-poles alternating at a predetermined angular pitch, and magnetic sensing elements 13 and stationary magnets 7 disposed so as to face their respective ring magnets 4. The rotary operation portion 2 is covered by an operation plate 16 having formed at its center a roller insertion hole 16a for projecting a part of the outer circumferential surface of the roller 3. The rotation of the roller 3 is magnetically sensed, and switches 9 and 11 are provided so as to be turned "ON"/"OFF" in accordance with operations of pressing the roller 3 and rocking the operation plate 16 in the "front", "back", "left", and "right" directions.

## Claims

1. An input device, comprising:
a rotary operation portion including:
a roller to be rotationally operated by external force applied to its outer circumferential surface in a circumferential direction;
ring magnets fitted and secured on their respective rotary shafts provided on opposite end surfaces of the roller, the ring magnets each being magnetized with the Sand N-poles alternating at a predetermined angular pitch; and
magnetic sensing elements and stationary magnets provided so as to face their respective ring magnets;
an operation plate having provided at its center an insertion hole into which the roller is inserted, so as to allow a part of the outer circumferential surface to project upward, the operation plate being disposed so as to cover the rotary operation portion other than the part of the outer circumferential surface from above and so as to be able to rock in such a manner that, when portions in directions around the insertion hole are pressed, the pressed portions move down; and
a plurality of switches provided at locations corresponding to the portions in the directions in the operation plate, each switch being turned "ON" when its corresponding portion moves down, and "OFF" when the corresponding portion returns to its original position.

2. The input device according to claim 1, wherein,
the rotary operation portion is provided so as to be able to move up and down, and
a switch is provided at a location corresponding to the rotary operation portion, the switch being turned "ON" when the rotary operation portion moves down, and "OFF" when the rotary operation portion returns to its original position.

3. The input device according to claim 1, wherein the ring magnets are secured on the rotary shafts such that the magnetizing magnetic poles are out of phase with each other.

4. An electronic apparatus, comprising:
an input device of claim 1;
a control unit connected to the magnetic sensing elements and the switches; and
a display unit connected to the control unit,
wherein the control unit controls a display on the display unit based on signals from the magnetic sensing elements and the switches.
